(19) Europäisches Patentamt
European Patent Office
Office européen des brevets

(11) **EP 1 723 716 B1**

(12) **EUROPEAN PATENT SPECIFICATION**

(45) Date of publication and mention
of the grant of the patent:
**16.12.2009 Bulletin 2009/51**

(51) Int Cl.:
***H02P 21/00*** (2006.01)

(21) Application number: **05722199.6**

(22) Date of filing: **10.03.2005**

(86) International application number:
**PCT/SE2005/000352**

(87) International publication number:
**WO 2005/086340 (15.09.2005 Gazette 2005/37)**

(54) **METHOD AND CONTROL SYSTEM FOR AN AC INDUCTION MOTOR**

VERFAHREN UND STEUERSYSTEM FÜR EINEN WECHSELSTROM-INDUKTIONSMOTOR

PROCEDE ET SYSTEME DE COMMANDE POUR MOTEUR A INDUCTION CA

(84) Designated Contracting States:
**AT BE BG CH CY CZ DE DK EE ES FI FR GB GR HU IE IS IT LI LT LU MC NL PL PT RO SE SI SK TR**

(30) Priority: **10.03.2004 SE 0400596**
**26.07.2004 SE 0401924**

(43) Date of publication of application:
**22.11.2006 Bulletin 2006/47**

(73) Proprietor: **JÖNSSON, Ragnar**
**271 95 Ystad (SE)**

(72) Inventor: **JÖNSSON, Ragnar**
**271 95 Ystad (SE)**

(74) Representative: **Asketorp, Göran**
**Asketorp Patent & Juridik AB**
**Råbygatan 14B**
**223 61 Lund (SE)**

(56) References cited:
**EP-B1- 0 515 469**

• KUBOTA H.ET AL: 'Stable operation of adaptive observer based sensorless induction motor drives in regenerating mode at low speeds.' CONFERENCE RECORD OF THE 2001 IEEE INDUSTRY APPLICATIONS CONFERENCE. vol. 1, 2001, pages 469 - 474, XP010561744
• IDE K. ET AL: 'A novel hybrid speed estimator of flux observer for induction motor drives.' PROCEEDINGS OF THE 2002 IEEE INTERNATIONAL SYMPOSIUM OF INDUSTRIAL ELECTRONICS (CAT.NO.02TH8608C) vol. 3, 2002, pages 822 - 827, XP010597987
• KIM J. ET AL: 'Sensorless vector control scheme for induction motors based on a stator flux estimator with quadrant error compensation rule.' IEEE TRANSACTIONS ON INDUSTRY APPLICATIONS. vol. 39, no. 2, March 2003 - April 2003, pages 492 - 503, XP011073620

**Description**

AREA OF INVENTION

The present invention relates to a method and control system for an AC induction motor, and more specifically for sensorless field oriented control. The motor comprises a stator, a rotor, at least two stator windings and at least two rotor windings. The control system comprises first and second control signals, from which output voltages are calculated and fed to the motor for the operation and control of the motor. The first control signal essentially controls the torque of the motor and the second control signal essentially controls the magnetizing current or flux of the motor. A major feature of the invention is that it permits sensorless control, i.e. without a mechanical sensor on the motor shaft.

BACKGROUND OF INVENTION

The present invention is based on the invention disclosed in EP-B-0515469, which is owned by applicant of the present invention. Said patent document discloses a method and control system for an AC induction motor for control thereof in four quadrants, i.e. both as motor and as generator. The system has been given the name "Natural Field Orientation" NFO, because of the fact that the control strategy is simple and based on "natural" phenomena in the motor itself.

Although the system of EP-B-0515469 operates well in most circumstances, there is always a problem with such control systems close to zero electric frequency. This is because the signals and currents are transferred from the stator side to the rotor side of the motor via an airgap and through transformer action. It is intuitively clear that problems may arise when the frequency of the electric and magnetic field is close to zero. It has also turned out that there might be areas of instability in the prior art system, especially around zero electric frequency.

It is noted that the motor may be operated at zero rotational speed of the motor shaft, and still generate torque, for example for holding a load at a fixed position. In this case, the rotational speed of the motor is zero, but the frequency of the electric or magnetic field of the motor is non-zero.

Certain motor control systems may have an instability area, in which the control system of the motor fails to provide correct control of the motor. Moreover, the control system may have problem of controlling the motor at 0 Hz electric frequency as outlined above.

Moreover, sensorless control is especially difficult at low motor speeds, close to zero speed. Calculation of control signals relies on measured electrical quantities, such as voltages and currents, and an accurate knowledge of the motor parameters. Especially the stator resistance has a dominating role. It is important to know the true value of the stator resistance in order to obtain good performance of the control system, especially at low speeds. The stator resistance depends on the temperature of the motor windings, i.e. on the temperature of the motor. A modern motor with isolation class F can be operated at 40 degrees Celsius ambient temperature and with an internal temperature rise of 105 degrees. When the motor heats up from normal ambient temperature of 20 degrees to maximum permissible temperature of 145 degrees the copper resistance will increase approximately 50 %. This large variation explains why it is important to monitor and measure the true stator resistance during motor operation, i.e. "on-line". In the following, the term "adaptation" is used to describe the process of automatic measurement of the resistance when the motor is used in normal operation.An article by Kubota H. et al, with the title "Stable operation of adaptive observer based sensorless induction motor drives in regenerating mode at low speeds", Conference Record of the 2001 IEEE Industry Application Conference, Vol. 1. 2001, pages 469-474, XP 010561744, discloses a method avoiding zero frequency operation with controlling a rotor flux level.

DISCLOSURE OF THE INVENTION

An object of the present invention is to provide a method and a system for control of an AC induction motor, wherein the problem of instability is addressed.

According to an aspect, there is provided a control system for an AC induction motor for sensorless field oriented control, comprising a stator, a rotor, at least two stator windings and at least two rotor windings, said control system comprising first ($u_{Sq}$) and second ($u_{Sd}$) control signals, from which output voltages ($u_{SR}$, $u_{SS}$, $u_{ST}$) are calculated and fed to the motor for the operation and control of the motor, wherein said first control signal ($u_{Sq}$) essentially controls the torque of the motor and said second control signal ($u_{Sd}$) essentially controls the magnetizing current or flux of the motor, for control in four quadrants, wherein in an area close to the electrical frequency zero, where the system has an instability, the control system adds a compensation value to an electrical control frequency ($\omega_{mR}$) calculated by the control system, wherein said control system further comprises a motor model and a control model, and saidcompensation value is:- $(i_{mR1} - i_{Sd1}) * (2 * i_{Sq2} * R_{S1})/(i_{mR1} * i_{mR1} * L_{S1})$., in which: $i_{mR}$ = reference value for magnetizing current; $i_{Sd}$ = measured value of magnetizing current; $i_{Sq}$ = torque producing current; $R_S$ = stator resistance; $L_S$ = main inductance; and index "1" refers to a control model and index "2" refers to a motor model of the control system.The compensation value may be added in an instability area in which an internal feedback of an error angle is not negative. The instability area may be in the interval of the first control signal $u_{Sq1}$ from zero to $i_{Sq2}R_{S1}$ where $i_{Sq2}$ is a measured rotor current and $R_{S1}$ is stator resistance. The compensation value may be multiplied with a function that lets it decrease towards zero outside the instability area.

According to another aspect, there is provided a method for controlling an AC induction motor (M) for field oriented control, comprising a stator, a rotor, at least two stator windings and at least two rotor windings, said control system comprising first ($u_{Sq}$) and second ($u_{Sd}$) control signals, from which output voltages ($u_{SR}$, $u_{SS}$, $u_{ST}$) are calculated and fed to the motor for the operation and control of the motor, wherein said first control signal ($u_{Sq}$) essentially controls the torque of the motor and said second control signal ($u_{Sd}$) essentially controls the magnetizing current or flux of the motor, for control in four quadrants, wherein in an area close to the electrical frequency zero, where the system has an instability, the control system adds a compensation value to an electrical control frequency ($\omega_{mR}$) calculated by the control system, and wherein said control system further comprises a motor model and a control model, and said compensation value is: - $(i_{mR1} - i_{Sd1})$ * ( 2 * $i_{Sq2}$ * $R_{S1}$) / ($i_{mR1}$ * $i_{mR1}$ *$L_{S1}$)., in which: $i_{mR}$ = reference value for magnetizing current; $i_{Sd}$ = measured value of magnetizing current; $i_{Sq}$ = torque producing current; $R_S$ = stator resistance; $L_S$ = main inductance; and index "1" refers to a control model and index "2" refers to a motor model of the control system.. The addition of said compensation value may take place only in an instability area in which an internal feedback of an error angle ($\Delta$) is not negative. The instability area may be in the interval of the first control signal $u_{Sq1}$ from zero to $i_{Sq2}R_{S1}$ where $i_{Sq2}$ is a measured rotor current and $R_{S1}$ is stator resistance. The compensation value may be multiplied with a function that lets it decrease towards zero outside the instability area.

According to a further embodiment, the method may be based on the following equations:

$$R_S \bar{i}_S + L_S \frac{d\bar{i}_S}{dt} + L_0 \frac{d}{dt}\left(\bar{i}_R e^{j\varepsilon}\right) = \bar{u}_S \qquad (1)$$

Stator circuit in stator coordinates

$$R_R \bar{i}_R + L_R \frac{d\bar{i}_R}{dt} + L_0 \frac{d}{dt}\left(\bar{i}_S e^{-j\varepsilon}\right) = 0 \qquad (2)$$

Rotor circuit in rotor coordinates

$$J\frac{d\omega}{dt} = m_M - m_L \doteq \frac{2}{3} L_0 \Im\left[\bar{i}_S \left(\bar{i}_R e^{j\varepsilon}\right)^{\cdot}\right] - m_L \qquad (3)$$

Torque equation.
For definitions of the symbols, see below.

BRIEF DESCRIPTION OF DRAWINGS

Further objects, features and advantages will appear from the following detailed description of the principles of the invention with reference to the appended drawings, in which:

Fig. 1 is block diagram of a control system according to prior art.
Figs. 2 and 3 are schematic circuit diagrams of a motor model which is the basis for the present invention.
Fig. 4 is a block schema of a rotor flux motor model according to the invention.
Fig. 5 is a block schema of the NFO control system for the rotor flux model.
Fig. 6 is a block schema of the control system which is simplified for the purpose of the present invention.
Fig. 7 is a block schema similar to Fig. 6 in which the compensation according to the present invention has been added.
Fig. 8 is a block schema disclosing the influence of error factors.
Fig. 9 is a diagram showing a feedback stabilizing function as a function of the control voltage and a strategy for compensation.
Figs. 10, 11 and 12 are block schema similar to Fig. 8 disclosing different steps of the present invention.
Fig. 13 is a diagram showing voltages over time for the control system of the invention.
Fig. 14 is block diagram of a first embodiment of the control system of the invention.

Fig. 15 is block diagram of a second embodiment of the control system of the invention.

DETAILED DESCRIPTION OF EMBODIMENTS OF THE INVENTION

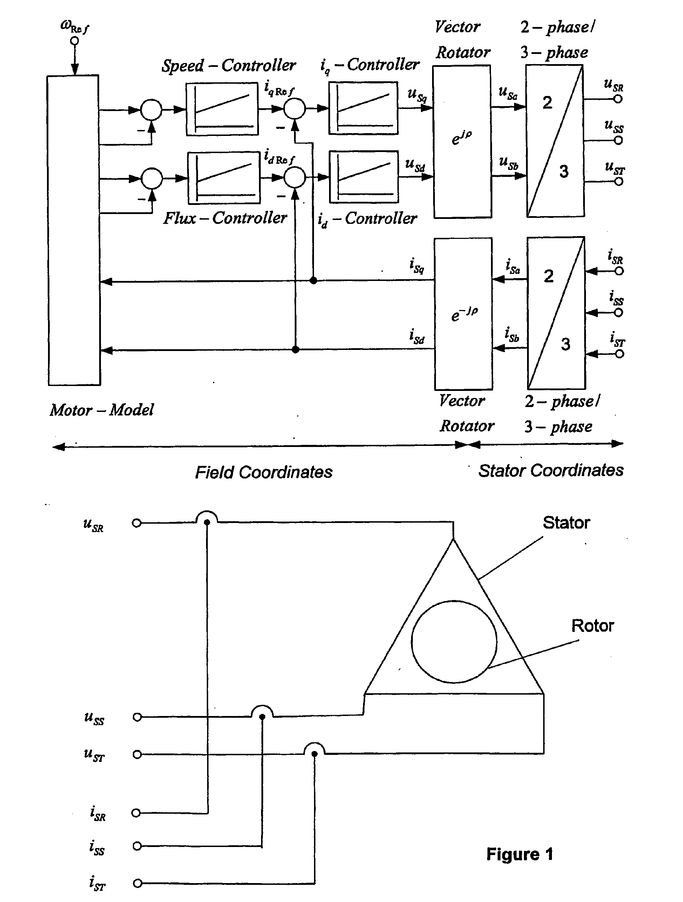

Figure 1 is a block diagram of a typical, modern system for field oriented control of an AC motor. The motor itself is symbolically shown in the lower part of the diagram and is connected to the contacts defined as $u_{SR}$, $u_{SS}$ and $u_{ST}$. Motor currents $i_{SR}$, $i_{SS}$ and $i_{ST}$ are measured and fed back to the system.

The left part of the system, to the left of the vector rotators, operates in field coordinates. The right part, to the right of the vector rotators, operates in stator coordinates. The vector rotators make the conversion between the two coordinate systems.

The AC motor can be controlled in the same simple way as a DC motor, thanks to field orientation. The block diagram to the left of the vector rotators shows a classical "cascaded" structure with two channels, well known from DC motor control. A d-channel controls the magnetic field and a q-channel controls the torque. The two channels can be controlled independently. Voltages and currents in field coordinates are DC quantities, as opposed to the AC voltages and currents in stator coordinates.

There are two current controllers that operate closest to the motor. The motor currents $i_{SR}$, $i_{SS}$ and $i_{ST}$ are measured in stator coordinates and converted to currents $i_{Sd}$ and $i_{Sq}$ in field coordinates by the lower vector rotator. The measured currents are compared with the commanded currents (reference currents). The current controllers amplify the difference and generate voltage control signals $u_{Sd}$ and $u_{Sq}$ that are connected as inputs to the upper vector rotator.

The whole theory for motor control is two-dimensional. The output signal from the vector rotator is a two-phase voltage vector $u_{Sa}$, $u_{Sb}$. Most motors have, however, three phases. For this reason the signal is converted to three-phase voltages $u_{SR}$, $u_{SS}$ and $u_{ST}$. A similar conversion is made of the current signals. The present invention can be used for any number of phases.

Modern control systems are normally digital and, consequently, the three control signals are digital. They must be "amplified" by power electronics that converts the signals to "real" voltages. The power electronics normally operates with pulse width modulation (PWM) as is well known. This is not important for the understanding of the invention and is not shown in the block diagram or further described here.

The motor can be said to be "voltage controlled". The three voltages $u_{SR}$, $u_{SS}$ and $u_{ST}$ are connected to the motor. However, the motor is also "current controlled" via the control loops for $i_{Sd}$ and $i_{Sq}$ currents.

The current control loops can have a very high bandwidth. This makes it possible to control the motor with very short reaction times. The current control loops are also responsible for protection of the power electronics. Thanks to the fast and accurate current control it is possible to have well defined current limits for $i_{Sd}$ and $i_{Sq}$. The current limits operate on the control signals $i_{d\,Ref}$ and $i_{q\,Ref}$. These important advantages of current control make it a standard solution for most drive systems.

The "cascaded" control system in the block diagram has current controllers in the center. To the left of the current control loops comes the next higher level of control, in this example shown as a speed controller and a flux controller. It is possible to have still higher levels of control, for example a position controller for the rotor angle. All such function can be included in the block named "Motor- Model". This is, however, not necessary for understanding the invention and is not shown here.

The cascaded structure has been developed during long time and can be described as a "de facto" standard for modem motor drives. The structure is essentially the same as in older solutions with DC drives. The present invention is intended for the same type of cascaded control loops, except for those differences that will be described as parts of the present invention.

Figure 1 shows conversion between 2-phase and 3-phase systems. This is a trivial and well-known operation. It has no influence on the control theory as such, except for some scaling factors. Consequently, it has no importance for understanding the present invention and the rest of this description is made for a 2-phase system.

There may be some confusion regarding the meaning of 0 Hz. It can be the rotor frequency (the mechanical rotational speed of the rotor) but it can also be the electrical frequency, that is not the same as the rotor frequency. 0 Hz in this description always refers to the electrical frequency.

The present invention is based on a mathematical motor model with nonlinear vectorial equations. Equations and symbols are based on: W. Leonhard, Control of Electrical Drives, Third edition, Springer Verlag 2001

$$R_S \bar{i}_S + L_S \frac{d\bar{i}_S}{dt} + L_0 \frac{d}{dt}\left(\bar{i}_R e^{j\sigma}\right) = \bar{u}_S \qquad (1)$$

Stator circuit in stator coordinates

$$R_R \bar{i}_R + L_R \frac{d\bar{i}_R}{dt} + L_0 \frac{d}{dt}\left(\bar{i}_S e^{-j\varepsilon}\right) = 0 \qquad (2)$$

Rotor circuit in rotor coordinates

$$J\frac{d\omega}{dt} = m_M - m_L = \frac{2}{3}L_0\Im\left[\bar{i}_S\left(\bar{i}_R e^{j\varepsilon}\right)^*\right] - m_L \qquad (3)$$

Torque equation

$$\frac{d\varepsilon}{dt} = \omega \qquad (4)$$

Definition of rotor frequency

Symbols:

$L_0$ = mutual inductance
$L_S = (1 + \sigma_S)L_0$ = stator inductance
$L_R = (1 + \sigma_R)L_0$ = rotor inductance
$\sigma_S$ = stator leakage factor
$\sigma_R$ = rotor leakage factor

$$\sigma = 1 - \frac{1}{(1+\sigma_S)(1+\sigma_R)} = \textbf{leakage factor}$$

$\varepsilon$ = rotor angle (mechanical angle)
$\dot{\varepsilon} = \omega$ = rotor frequency (mechanical speed)
$\rho$ = rotor flux angle

$\dot{\rho} = \omega_{mR}$ = rotor flux frequency $\quad T_R = \dfrac{L_R}{R_R} = \textbf{rotor time constant}$ = rotor time constant

$S$ = Laplace operator
$\Im$ = symbol for "imaginary component"
* = symbol for "complex conjugate value"
$R_S$ = stator resistance
$R_R$ = rotor resistance
$L_S$ = main inductance
$\omega$ = rotor frequency
$\rho$ = vector rotation angle
$\Delta = \rho_1 - \rho_2$ = vector rotation error
$i_{mR}$ = reference value for magnetizing current
$i_{Sd}$ = measured value of magnetizing current
$i_{Sq}$ = torque producing current
$u_{Sd}$ = control voltage in the d-channel
$u_{Sq}$ = control voltage in the q-channel

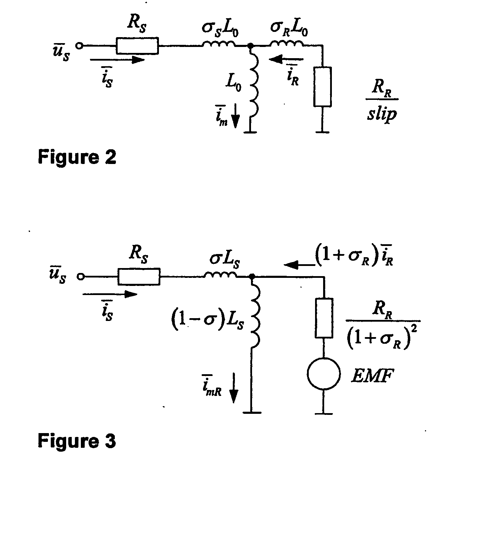

The mathematical motor model can be represented by a familiar single-phase equivalent circuit, see Fig. 2. It is a convenient model but its validity is restricted to steady state operation with sinusoidal symmetrical currents and constant load torque. Leakage inductance is shown both on stator side and rotor side, as in a real motor. The rotor circuit is conventionally represented by the rotor resistance divided by "slip". Slip is the difference between the electrical frequency and the rotor frequency. This model is based on the original motor equations.

The mathematical motor model as given in equations 1 - 3 above is, however, valid for any waveforms of voltages, currents and at varying load torque and speed. Consequently, this mathematical model is the basis and starting point for the following description.

The original equations can be transformed in a number of steps in order to make them more useful for control purposes. The first step is to eliminate the rotor current from the equations. In order to do so a new magnetizing current is defined (compare figure 3):

$$\bar{i}_{mR} = \bar{i}_S + (1 + \sigma_R)\bar{i}_R e^{j\varepsilon} \tag{5}$$

$$\bar{i}_R e^{j\varepsilon} = \frac{1}{(1 + \sigma_R)}(\bar{i}_{mR} - \bar{i}_S) \tag{6}$$

The new expression for the rotor current $\bar{i}_R e^{j\varepsilon}$ can now be inserted in the equations. The special definition of the magnetizing current results in a modified motor model, see figure 3. This is a so-called "Rotor Flux" model with all the leakage inductance concentrated on the stator side. The present invention is based on the use of this model. The true rotor resistance plus an induced speed voltage EMF now represent the rotor model.

A field coordinate system is now defined by help of a field angle $\rho$ and the amplitude of the magnetizing current $i_{mR}$:

$$\bar{i}_{mR} = i_{mR} e^{j\rho} \tag{7}$$

The motor equations can now be transformed to field coordinates. Finally the complex vectors for voltages and currents are split into d- and q-components in field coordinates in real values:

$$v_{Sd} = (1 - \sigma)L_S \frac{di_{mR}}{dt} = u_{Sd} - R_S i_{Sd} - \sigma L_S \left( \frac{di_{Sd}}{dt} - \dot{\rho} i_{Sq} \right) \tag{8}$$

$$v_{Sq} = (1 - \sigma)L_S \dot{\rho} i_{mR} = u_{Sq} - R_S i_{Sq} - \sigma L_S \left( \frac{di_{Sq}}{dt} + \dot{\rho} i_{Sd} \right) \tag{9}$$

$$i_{Sd} = i_{mR} + \frac{(1 - \sigma)L_S (1 + \sigma_R)^2}{R_R} \frac{di_{mR}}{dt} = i_{mR} + T_R \frac{di_{mR}}{dt} \tag{10}$$

$$i_{Sq} = (\dot{\rho} - \dot{\varepsilon}) \frac{(1 - \sigma)L_S (1 + \sigma_R)^2}{R_R} i_{mR} = (\dot{\rho} - \dot{\varepsilon})T_R i_{mR} \tag{11}$$

$$m_M = \frac{2}{3}(1 - \sigma)L_S i_{Sq} i_{mR} \tag{12}$$

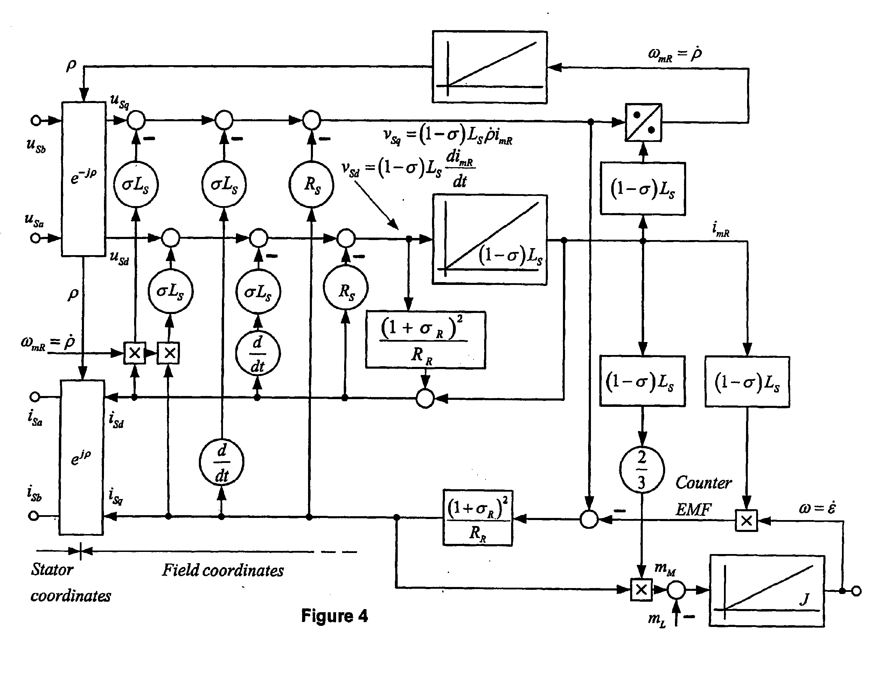

Figure 4 is a block diagram of the complete motor model in field-coordinates. This model, although transformed, is an exact representation of the original mathematical motor model as represented by equations 8 - 12.

The model describes a two-pole motor. Conversion to other pole numbers is trivial but not shown. The factor 2/3 is a scaling factor that depends on the definition of motor parameters, voltages, currents and phase number.

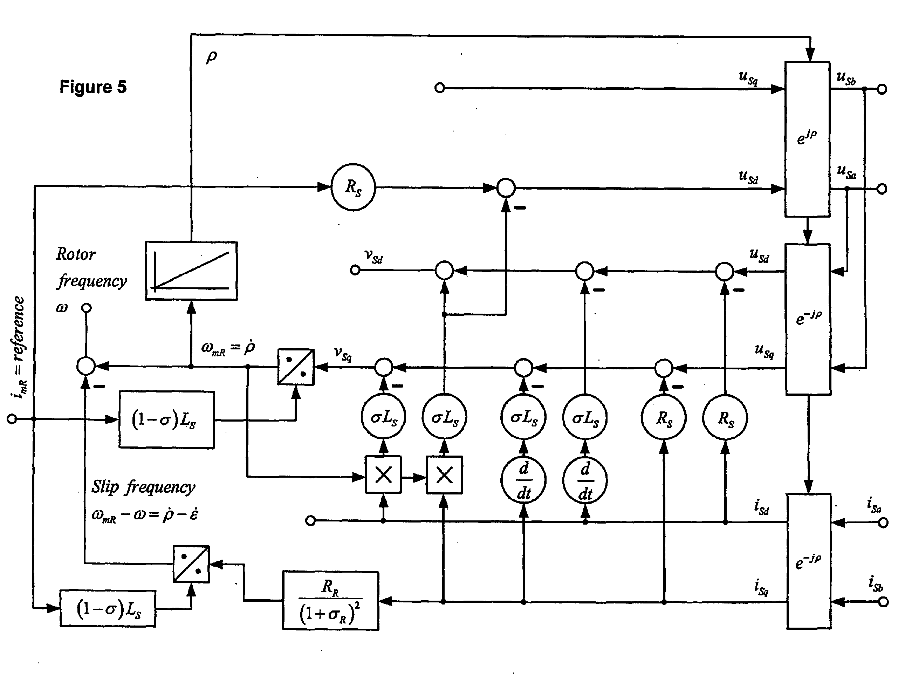

Fig. 5 is a block schema of the NFO control system for the rotor flux model. This model represents the original and complete NFO Control system. All effects of the leakage inductance inside the motor model are compensated by four signal components on the control side.

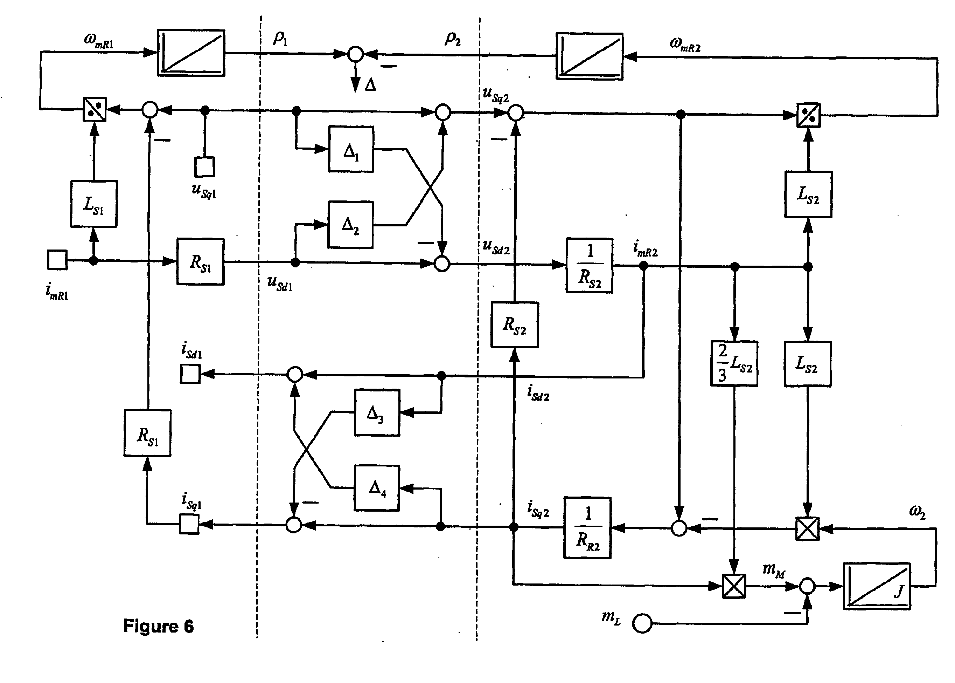

It is possible to modify this model depending on the actual application. It is, for example, not necessary to measure the voltages $u_{Sd}$, $u_{Sb}$ and vector-rotate them from stator coordinates back to field coordinates $u_{Sd}$, $u_{Sq}$. The voltages $u_{Sd}$, $u_{Sq}$ are already available inside the system as input signals to the upper vector rotator. This simplification will be used in the following description of figure 6.

Several simplifications and modifications of the control system can be made. They are not necessary for understanding the present invention and are not described here.

However, for the present invention, it is important that the voltage $u_{Sd}$ is calculated as shown in figure 5. The voltage $u_{Sq}$ can be calculated and generated arbitrarily without consequences for the present invention.

The symbols in the motor model (figure 4) and in the control model (figure 5) are identical. In reality there is a difference between the real parameter values in the motor and the model values in the control system. Thus, the parameters will be identified by separate indices in the following.

The motor model in figure 4 has intentionally been developed as a "mirror image" of the NFO Control system in figure 5, especially regarding the calculation of vector transformation angle.

Figure 4 and figure 5 describe the original NFO motor control system and the figures serve as a basis for the following description.

The complete motor model (figure 4) and the control model (figure 5) have been designed in such a way that they can be linked together by only four signals, two control voltage signals from the control model to the motor and two measured current signals from the motor to the control model. The signals can go straight between the vector rotators on either side.

In order to separate the two systems, all parameters and signals on the control side have got an index "1" and the corresponding quantities on the motor side have got an index "2".

The vector rotation angle $\rho_1$ in the control system should be the same as the corresponding angle $\rho_2$ in the motor model. Then the control system operates with correct field orientation. The vector rotation angles on the control side and on the motor side have different signs and consequently the two pairs of vector rotations will cancel each other. Ideally, it should be possible to eliminate the vector rotators completely and connect the control model and the motor model together directly, with signals in d- and q-coordinates, since, apparently the conversion to and from stator coordinates has no influence on the system performance.

However, there are two important reasons why it is not possible to eliminate the vector rotators. The first reason is a practical one. In a real system the vector rotators are necessary because the motor voltages and currents must be generated and measured in stator coordinates. The second reason has to do with the accuracy of the control system. It is impossible to calculate a vector angle $\rho_1$ that is exactly the same as the angle $\rho_2$. There will always be a small error angle $\rho_1 - \rho_2 = \Delta$. Any error A has negative influences on system performance.

An object of the present invention to make the error angle $\Delta$ as small as possible.

A major simplification of the theoretical system model can be achieved if the two pairs of vector rotators are combined and represented by two single vector rotators that operate on the error angle $\Delta$, one vector rotator for voltage and one for current. The effect on the theoretical system will be exactly the same.

The error angle should always be small, typically less than 0,1 radian. Then trigonometrical approximations can be made:

$$\cos\Delta \approx 1$$
$$\sin\Delta \approx \Delta \qquad\qquad (13)$$

Then, the transfer function of the vector rotator can be mathematically described by complex numbers:

$$e^{j\Delta} = \cos\Delta + j\sin\Delta \approx 1 + j\Delta \qquad\qquad (14)$$

The real number "1" represents the ideal and intended signal transmission and the imaginary number "$j\Delta$"

represents a cross-coupling between the d- and q-channels because of the error angle.

Figure 6 shows a combination of the control system and the motor. Only those parts of the system that are necessary for explaining the invention are shown.

The control system is located on the left side and the motor model on the right side of the two dotted lines. In the center, between the dotted lines, are the two new vector rotators that replace the four original vector rotators. The trigonometrical approximations have been used in order to make the model as simple as possible. It is obvious that all cross-couplings between the d- and the q-channel will disappear if the error angle $\Delta$ is zero. This would be a perfect control system.

The connection points for the two control signals $i_{mR1}$ and $u_{Sq1}$ and the connection points for the two measured signals $i_{Sd1}$ and $i_{Sq1}$ have been drawn as four quadratic symbols.

There are three integrators in the system. They are symbolized graphically with diagrams of a constantly increasing signal. Two of the integrators are used for integration of the electrical frequencies $\omega_{mR1}$ and $\omega_{mR2}$ to the vector angles $\rho_1$ and $\rho_2$. They have no scaling factors.

The third integrator calculates the rotor frequency $\omega_2$ as a function of the net torque $(m_M - m_L)$. $J$ represents the total inertia of the motor and the load, $m_M$ = motor torque, and $m_L$ = load torque:

$$\omega_2 = \int \frac{m_M - m_L}{J} dt \qquad (15)$$

A simplified system model will help to improve the understanding of the invention and its effects on the control system. The model in figure 6 has been simplified in two more respects.

The leakage inductance is a purely parasitic element that doesn't help the motor to produce torque. The effects of the leakage inductance are relatively small and proportional to the electrical frequency and the rate of change of the currents. The present invention is intended to improve the performance at slow movements with very low frequencies, where the leakage inductance has little effect. Further on, the effects of the leakage inductance on the motor side are compensated by calculated signals on the control side. Consequently, all signal paths with the leakage coefficient $\sigma$ have been eliminated, both on the motor side and the control side.

Still another simplification has been made in figure 6. The motor is assumed to operate with constant magnetic flux in the low speed region. Consequently, the magnetizing time constant in the motor has been neglected in figure 6. The magnetizing current $i_{mR2}$ is obtained as follows:

$$i_{mR2} = \frac{u_{Sd2}}{R_{S2}} \qquad (16)$$

The purpose of figure 6 is to make possible an error analysis, based on differences between the parameter values $R_S$ and $L_S$. The parameter errors are assumed to be small (less than 10 %). Also the influence of the error angle A will be analyzed. The error angle $\Delta$ is assumed to be less than 0,1 radian. In Fig. 6, the error angles $\Delta = \Delta_1 = \Delta_2 = \Delta_3 = \Delta_4$ are identical error angles, numbered only for identification purposes.

The rotor current $i_{Sq2}$ is proportional to the motor load and cannot be estimated or calculated in advance. It is therefore considered to be an independent, external input to the system.

The motor parameters cannot be changed and are considered to be reference values for the system. Two variables a and $\beta$ define the parameter errors for stator resistance and stator inductance in the control system:

$$R_{S2} = R_{S1}(1 + \alpha) \qquad (17)$$

$$L_{S2} = L_{S1}(1 + \beta) \qquad (18)$$

It is possible, by help of figure 6, to calculate some important quantities in the presence of the parameter errors $\alpha$, $\beta$ and the error angle $\Delta$.

- The control signals $i_{mR1}$ and $u_{Sq1}$ represent inputs to the system.
- The current $i_{Sq2}$ represents an external disturbance to the system.
- The difference between the control current $i_{mR1}$ and the measured current $i_{Sd1}$ is calculated.
- The difference between the frequencies $\omega_{mR1}$ in the control system and $\omega_{mR2}$ in the motor model is calculated.
- The product of two small errors is neglected. Also the squared value of one single small error is neglected.
- The effects of the errors are analyzed, one at a time. Then the other errors are assumed to be zero.
- Some algebraic approximations are used, for example:

$$\frac{1}{1+\alpha} = \frac{(1-\alpha)}{(1+\alpha)(1-\alpha)} = \frac{(1-\alpha)}{(1-\alpha^2)} \approx (1-\alpha) \qquad (19)$$

Effects of the a -error ($\beta$ and $\Delta$ are considered to be zero).

$$i_{Sd1} = i_{mR1}\frac{R_{S1}}{R_{S2}} = i_{mR1}\frac{R_{S1}}{R_{S1}(1+\alpha)} \approx i_{mR1}(1-\alpha) \qquad (20)$$

$$i_{mR1} - i_{Sd1} = \alpha i_{mR1} \qquad (21)$$

$$\omega_{mR1} = \frac{u_{Sq1} - i_{Sq2}R_{S1}}{i_{mR1}L_{S1}} \qquad (22)$$

$$\omega_{mR2} = \frac{u_{Sq1} - i_{Sq2}R_{S2}}{i_{mR2}L_{S2}} \qquad (23)$$

After some development:

$$\omega_{mR1} - \omega_{mR2} \approx -\alpha\frac{u_{Sq1} - i_{Sq2}R_{S1}}{i_{mR1}L_{S1}} + \alpha\frac{i_{Sq2}R_{S1}}{i_{mR1}L_{S1}} \qquad (24)$$

Effects of the $\beta$ -error ($\alpha$ and $\Delta$ are considered to be zero)

$$i_{Sd1} = i_{mR1} \qquad (25)$$

$$i_{mR1} - i_{Sd1} = 0 \qquad (26)$$

$$\omega_{mR1} = \frac{u_{Sq1} - i_{Sq2}R_{S1}}{i_{mR1}L_{S1}} \qquad (27)$$

$$\omega_{mR2} = \frac{u_{Sq1} - i_{Sq2}R_{S2}}{i_{mR2}L_{S2}} \qquad (28)$$

After some development:

$$\omega_{mR1} - \omega_{mR2} \approx \beta \frac{u_{Sq1} - i_{Sq2}R_{S1}}{i_{mR1}L_{S1}} \qquad (29)$$

Effects of the A -error ($\alpha$ and $\beta$ are considered to be zero)

$$i_{Sd1} = i_{mR1} - \Delta \frac{u_{Sq1}}{R_{S2}} + \Delta i_{Sq2} \qquad (30)$$

$$i_{mR1} - i_{Sd1} = \Delta \frac{u_{Sq1}}{R_{S2}} - \Delta i_{Sq2} = \Delta \frac{u_{Sq1} - i_{Sq2}}{R_{S1}} \qquad (31)$$

$$\omega_{mR1} = \frac{u_{Sq1} - i_{Sq2}R_{S1} + \Delta i_{mR1}R_{S1}}{i_{mR1}L_{S1}} \qquad (32)$$

$$\omega_{mR2} = \frac{u_{Sq1} - i_{Sq2}R_{S2} + \Delta i_{mR1}R_{S1}}{i_{mR2}L_{S2}} \qquad (33)$$

After some development:

$$\omega_{mR1} - \omega_{mR2} \approx -\Delta \frac{u_{Sq1}\left(u_{Sq1} - i_{Sq2}R_{S1}\right)}{i_{mR1}R_{S1}i_{mR1}L_{S1}} \qquad (34)$$

<u>Sum of all error components</u>

$$\sum \left(i_{mR1} - i_{Sd1}\right) = \alpha i_{mR1} + \Delta \frac{u_{Sq1} - i_{Sq2}R_{S1}}{R_{S1}} \qquad (35)$$

$$\sum \left(\omega_{mR1} - \omega_{mR2}\right) = \frac{u_{Sq1} - i_{Sq2}R_{S1}}{i_{mR1}L_{S1}}\left(-\alpha + \beta - \Delta \frac{u_{Sq1}}{i_{mR1}R_{S1}}\right) + \alpha \frac{i_{Sq2}R_{S1}}{i_{mR1}L_{S1}} \qquad (36)$$

Figure 6 shows the error angle Δ as the difference between the outputs ρ₁ and ρ₂ from two integrators. The same result can be obtained from one single integrator that operates on the frequency difference:

$$\Delta = \int \omega_{Mr1}\,dt - \int \omega_{mR2}\,dt = \int (\omega_{mR1} - \omega_{mR2})\,dt \tag{37}$$

By help of figure 6 it has been possible to calculate the frequency difference as a function of the error sources α, β and Δ. These relations can be shown in a new block diagram.

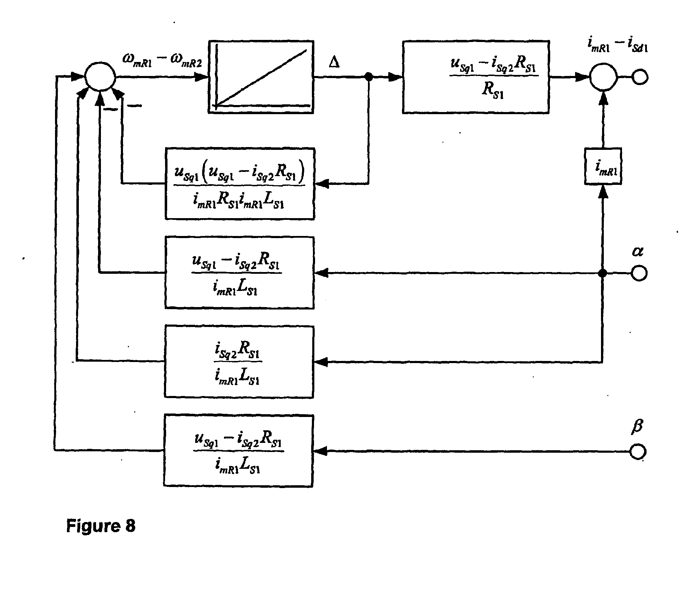

Figure 8 is based on equations 35 and 36 and shows a single integrator that integrates the frequency difference ($\omega_{mR1}$ -$\omega_{mR2}$) and generates the error angle Δ at the output. The error sources a and β are shown together with the signal paths that generate the frequency difference. There is a direct feedback path from the integrator output Δ to the input, and this feedback helps to stabilize the error angle Δ and keep it small.

All the blocks in figure 8 can be described as "transfer functions" for the error signals. The error signals are amplified by the values of the transfer functions inside the blocks. The transfer functions depend on the values of $u_{Sq1}$ and $i_{Sq2}$ and are not constant.

The expression ($u_{Sq1}$ - $i_{Sq2}R_{S1}$) can be seen in four of the transfer functions. It is proportional to the electrical frequency $\omega_{mR1}$. The transfer function is zero (0) when the electrical frequency is zero (0 Hz). This means that there is no signal transmission at this frequency. This has consequences for the whole system. This can be understood intuitively, since the control signals are transmitted from the stator side to the rotor side via an airgap via transformer action. If the electrical frequency is zero, no signals will be transformed.

The feedback from the integrator output Δ to the input disappears at the electrical frequency 0 Hz. This results in an "open" integrator. Any error signal at the input will cause the integrator output to drift away with an increasing error angle Δ. This is not acceptable.

The situation is improved by the fact that two of the error components from α and β also have zero signal transmission at 0 Hz. There is, however, one block that transmits the a signal without this restriction. Consequently, the electrical frequency 0 Hz is not a stable point for the integrator. Also a very small a -error will cause the error angle Δ to drift away without control with time.

Figure 8 also shows the signal ($i_{mR1}$ -$i_{Sd1}$) as a function of the different error sources. This signal can be calculated by the control system and used as an external feedback signal in order to stabilize the error angle Δ and keep it small. Figure 8 shows how the signal ($i_{mR1}$ - $i_{Sd1}$) has a direct connection with the error angle A via one block. Unfortunately, also this block has zero signal transmission at 0 Hz.

Consequently, 0 Hz electrical frequency is a "singular point" that cannot be controlled, because no measurement signals are available at 0 Hz. Modern control theory would say that there is no "observability" of the process at this frequency. The 0 Hz problem is a well-known general problem and not unique for the present invention.

The feedback connection of the integrator from the output Δ to the input has one more point with zero transmission, namely when the voltage $u_{Sq1}$ is zero. This zero point is not as critical as the 0 Hz point. It is possible to stabilize this point by help of the signal ($i_{mR1}$ -$i_{Sd1}$) and external feedback

The error analysis was not restricted to certain values of the signals $u_{Sq1}$ and $i_{Sq2}$. Any combination of positive and negative signals is allowed. This means that the motor can operate in both directions with positive as well as negative torque. This means that the motor can operate in "four quadrants" of a diagram for speed and torque. The system will operate well with correct field orientation as long as the error angle A is small and stable.

Figure 8 shows the internal feedback of the error angle Δ. This feedback has to be negative according to classical control theory. This requires that the transfer function for the feedback signal has a positive value. The transfer function is proportional to the expression $u_{Sq1}$ ($u_{Sq1}$ -$i_{Sq2}$ $R_{S1}$). This expression is positive as long as the two factors $u_{Sq1}$ and ($u_{Sq1}$ - $i_{Sq2}R_{S1}$) have the same polarity, plus or minus. However, if the two factors have different polarities, the transfer function will be negative and, thus, the internal feedback function will be positive and this results in an unstable system.

One purpose of the present invention is to compensate for this instability that occurs in a narrow zone.

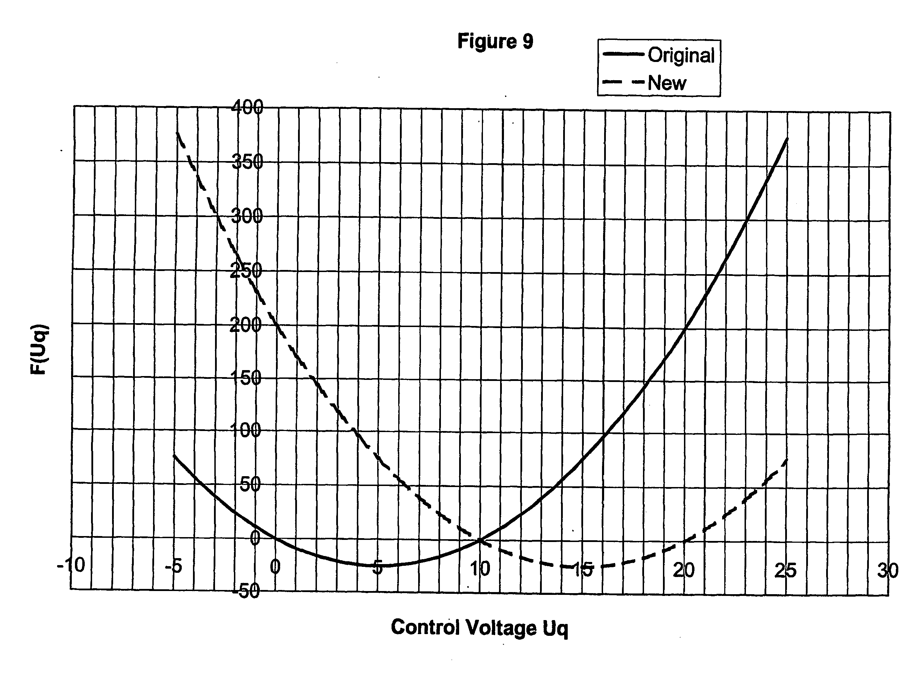

Figure 9 shows an XY-diagram. The X-axis represents the control voltage Uq = $u_{Sq1}$. The Y-axis represents the mathematical function F(Uq) = $u_{Sq1}(u_{Sq1}$ -$i_{Sq2}R_{S1})$ that is shown as a solid line.

The value $i_{Sq2}R_{S1}$ has been set to +10 volts as an example and typical value. The current $i_{Sq2}$ depends on the actual motor load and is not constant. The voltage $u_{Sq1}$ =10 represents the electrical frequency 0 Hz.

The parabolic function is proportional to the feedback transfer function in figure 8. The transfer function must be positive in order to give a negative feedback. A negative value of the transfer function will result in positive feedback and unstable operation. Consequently, the zone $0 \le u_{Sq1} \le i_{Sq2} R_{S1}$ is unstable. All other values of $u_{Sq1}$ will give stable operation.

This example has been shown for a positive value of the current $i_{Sq2}$. The theory is the same for negative values of the current $i_{Sq2}$. However, now the unstable zone is $i_{Sq2}R_{S1} \le u_{Sq1} \le 0$.

It will be shown how the unstable zone can be stabilized by an external compensating signal that is active substantially only within the unstable zone.

The parabolic curve shows the two points with zero signal transmission, for $u_q = 0$ and for $u_q = i_{Sq2}R_{S1} = 10$. The curve has a minimum for $u_q = 5$ and this is the most "dangerous" or difficult point. The unwanted positive feedback for the error angle $\Delta$ is strongest in this point.

According to the invention, it is possible to stabilize the system by help of an external compensating signal.

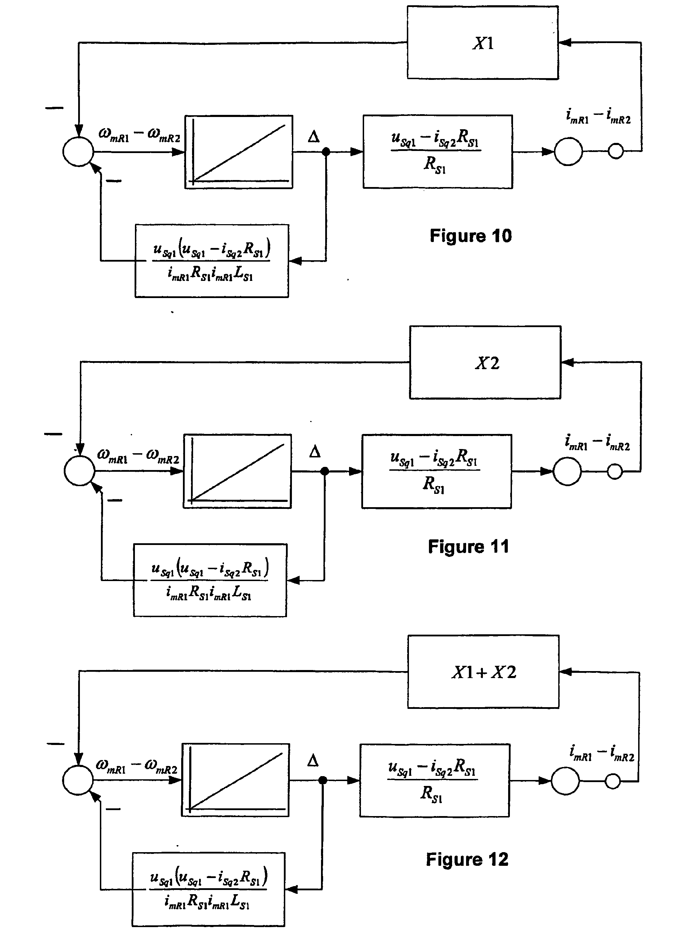

Figures 10 illustrates the basic principle for stabilization according to the present invention. The figure is identical with figure 8 but only those parts that are necessary for the explanation have been shown. The idea is to create a new feedback path from the output $\Delta$ of the integrator back to the input of the integrator.

The two signals $i_{mR1}$ and $i_{Sd1}$ are available within the control system and the difference signal $i_{mR1} - i_{Sd1}$ can be calculated. This signal will be used in the new feedback path.

Figure 10 shows the first step, the purpose of which is to eliminate the unwanted positive feedback in the original system. This can be accomplished by an external signal with the same transfer function ("gain") as the original signal path but with opposite polarity. A new block $X1$ has to be defined:

$$\frac{u_{Sq1}\left(u_{Sq1} - i_{Sq2}R_{S1}\right)}{i_{mR1}R_{S1}i_{mR1}L_{S1}} \equiv -\frac{u_{Sq1} - i_{Sq2}R_{S1}}{R_{S1}}X1 \tag{38}$$

Solve for $X1$ :

$$X1 = -\frac{u_{Sq1}}{i_{mR1}i_{mR1}L_{S1}} \tag{39}$$

The first step results in an "open integrator" that can drift away uncontrollably but the inherent instability has been removed. It needs a new stabilizing function.

Figure 11 shows the second step, the purpose of which is to create a "suitable" stabilization signal. The solution can be found in the XY-diagram in figure 9.

Practical experience has shown that the original motor control system behaves well at all positive values of $u_{Sq1}$ that are higher than the critical value $u_{Sq1} = i_{Sq2}R_{S1}$. This means that the parabolic curve to the right of $u_{Sq1} = 10$ represents a "suitable" transfer function. The purpose of the present invention is to create a "mirror image" of this transfer function inside the unstable zone. This mirror image is shown as a broken line in figure 9.

It remains to design the block X2 in such a way that it creates the wanted mirror image. The mirror image can be described as a parallel translation of the original function. This can be accomplished if the voltage $u_{Sq1}$ in the equations is replaced by $(u_{Sq1} - i_{Sq2}R_{S1})$. The following equation shows the wanted transfer function to the left and the practical realization to the right:

$$\frac{\left(u_{Sq1} - i_{Sq2}R_{S1}\right)\left(\left(u_{Sq1} - i_{Sq2}R_{S1}\right) - i_{Sq2}R_{S1}\right)}{i_{mR1}R_{S1}i_{mR1}L_{S1}} \equiv \frac{u_{Sq1} - i_{Sq2}R_{S1}}{R_{S1}}X2 \tag{40}$$

Solve for X2:

$$X2 = \frac{u_{Sq1} - 2i_{Sq2}R_{S1}}{i_{mR1}i_{mR1}L_{S1}} \tag{41}$$

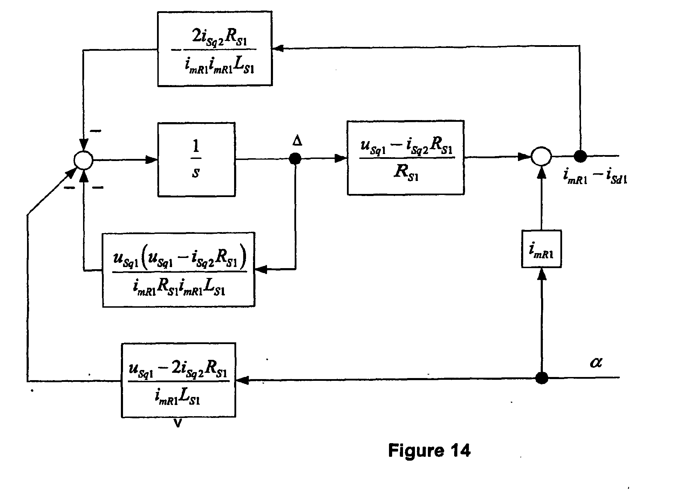

Figure 12 (see also Figure 14) shows the final solution according to the present invention, where the two transfer functions $X1$ and $X2$ have been combined.

$$X1 + X2 = -\frac{2 i_{Sq2} R_{S1}}{i_{mR1} i_{mR1} L_{S1}} \qquad (42)$$

Some special arrangement can be made at the point where the control voltage $u_{Sq1}$ reaches 0 volt and goes negative. See figure 9. Here the internal stabilizing function takes over, but it starts with zero gain. There will be an abrupt change when the system switches from the external stabilizing function (the broken line) to the internal stabilizing function (the unbroken line). It seems reasonable to make a soft transition instead of a hard transition. An example of a possible solution is as follows. Let the external stabilizing function remain active also in the zone $-i_{Sq2} R_{S1} \leq u_{Sq1} \leq 0$ but multiply it with a function that lets it decrease linearly to zero when $u_{Sq1}$ goes from 0 to $-i_{Sq2} R_{S1}$. Such a function would be:

$$\frac{u_{Sq1} + i_{Sq2} R_{S1}}{i_{Sq2} R_{S1}} \qquad (43)$$

In order to distinguish this zone from the unstable zone it has been named "support zone".

It is clear from the description and from figure 9 that the unstable zone has a variable width that is proportional to the $i_{Sq2}$ current. The two parabolic curves meet at 0 Hz and the transition between the curves is free from transients.

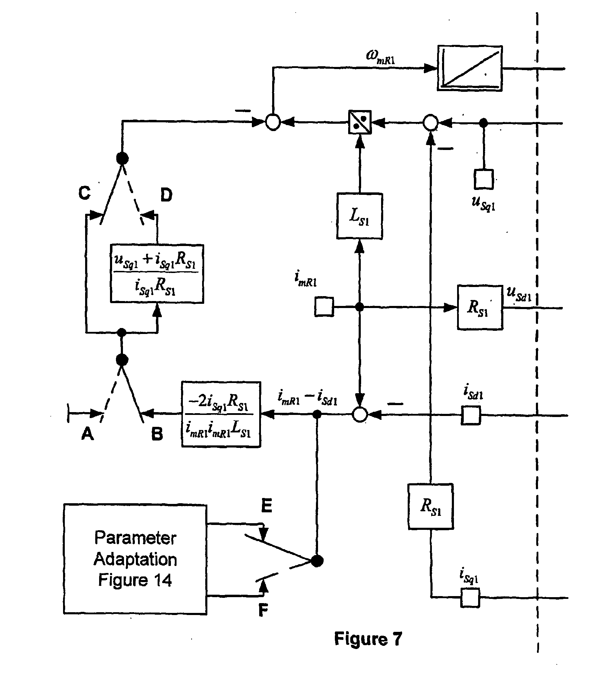

Figure 7 is based on figure 6 and shows an additional circuit that adds the stabilizing signal as a correction to the control frequency $\omega_{mR1}$. The transfer function (X1+X2) is shown in a separate block. The linearly decreasing function is shown in a second block. Two switches make it possible to select the correct signal combination both for the unstable zone and the support zone. The first switch AB selects when the stabilizing signal shall be used. The second switch CD selects between the unstable zone and the support zone. The following logic creates correct signals for all four quadrants of motor operation:

**Switch position A:** $\qquad \left| u_{Sq1} \right| \geq \left| i_{Sq1} R_{S1} \right| \qquad (44)$

**Switch position B:** $\qquad \left| u_{Sq1} \right| \leq \left| i_{Sq1} R_{S1} \right| \qquad (45)$

**Switch position C:** $\qquad u_{Sq1} i_{Sq1} \geq 0 \qquad (46)$

**Switch position D:** $\qquad u_{Sq1} i_{Sq1} \leq 0 \qquad (47)$

If stabilization is wanted only in the unstable zone and not in the support zone the logic can be modified as follows:

Switch position B:

IF

$$\left| u_{Sq1} \right| \leq \left| i_{Sq1} R_{S1} \right| \text{ AND } u_{Sq1} i_{Sq1} \geq 0$$

ELSE Switch position A

The second switch remains in position C.

Other solutions are possible.

The stabilizing function in the unstable zone according to the present invention has been designed as a mirror image of the inherent stabilization that operates well outside the unstable zone. Consequently, it can be considered to be a "natural" solution that takes advantage of the inherent properties in the system itself. There is no need to redesign the stabilization for different motor sizes or motor types. It is, however possible to add a multiplying scaling factor to the external stabilizing function in order to make it stronger or weaker, if this should be required. It is also possible to extend the operating range of the external stabilizing function in order to make it active also outside the unstable zone. This may be restricted to a limited range or be allowed to operate within the whole operating range.

An error analysis including quadratic error terms and squared values of single error terms will result in a more complete model with new error terms. It will help to analyze the effects of different errors more exactly, especially in the area close to 0 Hz.

The error analysis has been made with the assumption that the current $i_{Sq2}$ is an external disturbance that has influence on the whole system. Consequently the value of this current has been used in the theoretical analysis and in all equations. This current can, however, not be measured by the control system. Consequently, the measured current value $i_{Sq1}$ has been used in the control system. The currents will be identical if the system operates with the error angle $\Delta = 0$.

The stabilizing functions according to the present invention are based on the use of an error signal ($i_{mR1}$-$i_{Sd1}$). The important information in this error signal comes from the error angle $\Delta$. It is obvious, for example from the block diagram in figure 8 that 0 Hz is a special frequency, where no information about the error angle A is available. Consequently, 0 Hz is a "singular point" that has to be avoided. The system cannot guarantee a stable operation at this frequency.

One possible solution is to avoid this frequency by help of a "frequency jump" across a narrow zone close to 0 Hz.

Other solutions to solve the 0 Hz problem have been described in the literature. One such method is "signal injection". Injection of a special test signal in one of the control channels and analysis of the signal response makes it possible to get sufficient information about the field orientation and generate necessary stabilizing signals. Such test signals are typically in the range 50 - 100 Hz and they are applied only when the motor operates close to 0 Hz. It is possible to use such methods in combination with the present invention.

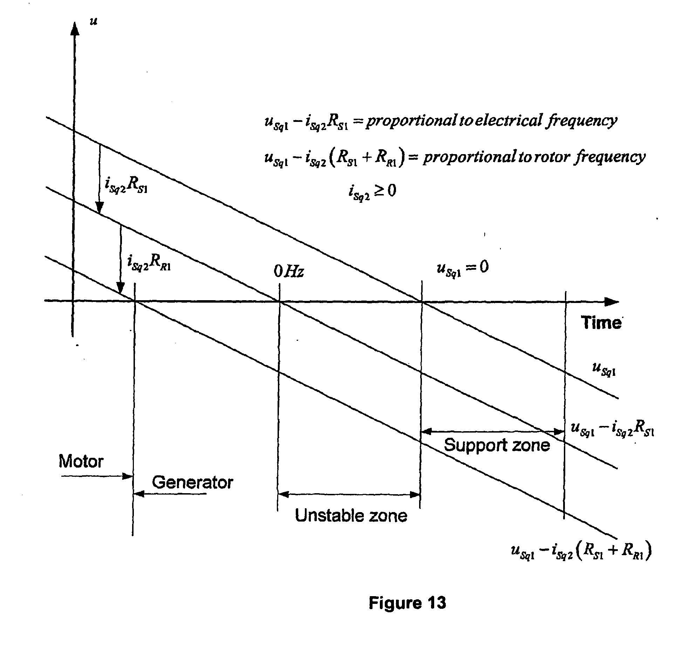

Figure 13 shows an example of a slow negative ramp through 0 Hz. The current $i_{Sq2}$ is positive. The control voltage $u_{Sq1}$ is slowly ramped down from positive values to negative values. Different operating zones are indicated.

The stable zones are defined as:

$$\left|u_{Sq1}\right| \geq \left|i_{Sq2} R_{S1}\right|$$

The unstable zone is defined as:

$$i_{Sq2} R_{S1} \geq u_{Sq1} \geq 0 \, .$$

The "support" zone is defined as:

$$0 \geq u_{Sq1} \geq -i_{Sq2} R_{S1} \, .$$

The operation is "naturally" stable on both sides of the unstable zone; i.e. the system needs no extra stabilizing signal. There is a shift from motor operation to generator operation when the rotor frequency goes through 0 Hz. However, for simplicity, operation to the left of the electrical frequency 0 Hz is defined as motor operation and operation to the right of 0 Hz is defined as generator operation. It has no practical consequences, at least in this description. The difference between the electrical frequency and the rotor frequency is the "slip" frequency.

An equivalent figure can be made for the case where the current $i_q$ is negative. Then:

The stable zones are defined as:

$$\left|u_{Sq1}\right| \geq \left|i_{Sq2} R_{S1}\right|$$

The unstable zone is defined as:

$$i_{Sq2} R_{S1} \leq u_{Sq1} \leq 0 .$$

The "support" zone is defined as:

$$0 \leq u_{Sq1} \leq -i_{Sq2} R_{S1} .$$

Figure 14 shows a block diagram with a modified external feedback signal. This corresponds to the circuit in Figure 7 with the switches in position B and C.

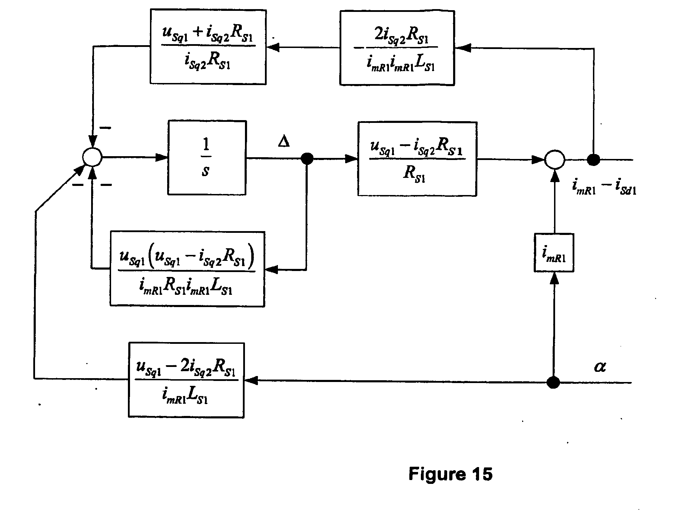

Figure 15 shows a block diagram with a modified external feedback signal. This corresponds to the circuit in Figure 7 with the switches in position B and D. There is a new block in series with the external feedback signal. It has a gain that goes linearly from +1 to 0 and it is intended to bring the stabilizing feedback to zero without transients. This function is active in the support zone only.

Adaptation of the inductance value can be made at high motor speed as already disclosed in EP-B-0515469. Adaptation of the stator resistance may be performed at a low speed range of the motor as already disclosed in EP-B-0515469.

The whole analysis has been based on an extremely simplified model of the complete motor drive system. The leakage inductances have been neglected. The magnetizing time constant has been neglected. Also the time constant for the error angle $\Delta$ has been neglected. The latter time constant depends on the operating conditions and is not "constant" in the normal sense. To take this into account would have made the analysis much more difficult. In order to overcome this problem the analysis has concentrated on "steady state performance". This is based on the assumption that the whole system will behave well, even dynamically, if steady state performance is good.

The present invention describes a method to control the motor down to very low frequencies, close to the electrical frequency 0 Hz. The 0 Hz frequency should be avoided by help of a short frequency jump or by other methods. Such a frequency jump will appear as a disturbance in the system and should be as small as possible. Accurate measurements and accurate parameter values will make it possible to use a small frequency jump. Therefore it is important, not only for control purposes, but also for the possibility to measure motor parameters and adjust them (adaptation) during system operation, to have accurate information from the process. Voltages and currents at the motor terminals are the only available information sources for the control system. The currents can easily be measured by current sensors. The voltages are pulse width modulated and not easy to measure. A common solution is to assume that the commanded voltages from the control system are correctly generated and delivered to the motor by the power electronics. There is, however, a strong distortion in this system, caused by so called "dead times" or "blanking times" in the switch process. The real pulse widths will not be the same as the commanded pulse widths. It is relatively easy to measure the true pulse widths at the motor terminals and compare them with the commanded pulse widths. The differences can then be used to compensate and eliminate the pulse time errors. If also the voltage amplitudes of the pulses are measured and compensated the final result will be very accurate.

Although the control system is intended to operate without a mechanical sensor on the rotor shaft, it is equally well suited for operation together with sensors. The sensor can be used to measure the rotor speed or some other physical quantity, depending on the application.

The whole control system has been designed and described for a rotor flux model of the AC induction motor. The use of a rotor flux model has distinctive advantages. It is, however, possible to design a similar system for a stator flux model.

The present invention has been described in connection with modem power electronics based on PWM modulation. Consequently the motor is voltage controlled. It is possible to generate control voltages by other means than PWM modulation. Such methods are useful for motor control.

The present invention has been described for a simplified model of the motor and the control system without leakage inductance. A similar, although more complex analysis can be made for the complete system.

The present invention has been described for a simplified error model, where products of two different errors or the square of one single error have been neglected. A more accurate analysis including such errors can be made. Such analysis adds more precision to the control system, but the principles remain the same.

The present invention is primarily intended to be used in connection with the well-known strategy for cascaded control systems. It is, however, possible to use the invention in combination with any other control strategy.

Herein above, the invention has been described with reference to several embodiments and based on theoretical evaluations. However, the invention is not limited to the embodiments described but other modifications and adaptations occurring to a person skilled in the art reading this specification are intended to be within the scope of the claims. The different features may be combined in other manners than set forth herein above. The invention is only limited by the appended patent claims.

**Claims**

1. A control system for an AC induction motor for sensorless field oriented control, comprising a stator, a rotor, at least two stator windings and at least two rotor windings, said control system comprising first ($u_{Sq}$) and second ($u_{Sd}$) control signals, from which output voltages ($u_{SR}$, $u_{SS}$, $u_{ST}$) are calculated and fed to the motor for the operation and control of the motor, wherein said first control signal ($u_{Sq}$) essentially controls the torque of the motor and said second control signal ($u_{Sd}$) essentially controls the magnetizing current or flux of the motor, for control in four quadrants,
   wherein in an area close to the electrical frequency zero, where the system has an instability, the control system adds a compensation value to an electrical control frequency ($\omega_{mR}$) calculated by the control system,
   charactrized in that said control system further comprises a motor model and a control model, and said compensation value is:

   $$- (i_{mR1} - i_{Sd1}) * (2 * i_{Sq2} * R_{S1}) / (i_{mR1} * i_{mR1} * L_{S1}), \text{ in which:}$$

   $i_{mR}$ = reference value for magnetizing current
   $i_{Sd}$ = measured value of magnetizing current
   $i_{Sq}$ = torque producing current
   Rs = stator resistance
   $L_S$ = main inductance
   and index "1" refers to a control model and index "2" refers to a motor model of the control system.

2. The system according to claim 1, **characterized in that** said compensation value is added in an instability area in which an internal feedback of an error angle ($\Delta$) is not negative.

3. The system according to claim 2, **characterized in that** said instability area is in the interval of the first control signal $u_{Sq1}$ from zero to $i_{Sq2}R_{S1}$ where $i_{Sq2}$ is a measured rotor current and $R_{S1}$ is stator resistance.

4. The system according to any one of claims 2 to 3, **characterized in that** the compensation value is multiplied with a function that lets it decrease towards zero outside the instability area.

5. A method for controlling an AC induction motor (M) for field oriented control, comprising a stator, a rotor, at least two stator windings and at least two rotor windings, said control system comprising first ($u_{Sq}$) and second ($u_{Sd}$) control signals, from which output voltages ($u_{SR}$, $u_{SS}$, $u_{ST}$) are calculated and fed to the motor for the operation and control of the motor, wherein said first control signal ($u_{Sq}$) essentially controls the torque of the motor and said second control signal ($u_{Sd}$) essentially controls the magnetizing current or flux of the motor, for control in four quadrants,
   wherein in an area close to the electrical frequency zero, where the system has an instability, the control system adds a compensation value to an electrical control frequency ($\omega_{mR}$) calculated by the control system,
   charactrized in that said control system further comprises a motor model and a control model, and said compensation value is:

   $$- (i_{mR1} - i_{Sd1}) * (2 * i_{Sq2} * R_{S1}) / (i_{mR1} * i_{mR1} * L_{S1}), \text{ in which}$$

   $i_{mR}$ = reference value for magnetizing current
   $i_{Sd}$ = measured value of magnetizing current
   $i_{Sq}$ = torque producing current
   $R_S$ = stator resistance
   $L_S$ = main inductance
   and index "1" refers to a control model and index "2" refers to a motor model of the control system.

6. The method according to claim 5, **characterized by** addition of said compensation value only in an instability area in which an internal feedback of an error angle ($\Delta$) is not negative.

7. The method according to claim 6, **characterized in that** said instability area is in the interval of the first control signal $u_{Sq1}$ from zero to $i_{Sq2}R_{S1}$ where $i_{Sq2}$ is a measured rotor current and $R_{S1}$ is stator resistance.

8. The method according to any one of claims 5 to 7, **characterized in that** the compensation value is multiplied with a function that lets it decrease towards zero outside the instability area.

9. The method according to any one of the claims 5 to 8, **characterized in that** the motor control system is based on the following equations:

$$R_S \bar{i}_S + L_S \frac{d\bar{i}_S}{dt} + L_0 \frac{d}{dt}\left(\bar{i}_R e^{j\varepsilon}\right) = \bar{u}_S \qquad (1)$$

Stator circuit in stator coordinates

$$R_R \bar{i}_R + L_R \frac{d\bar{i}_R}{dt} + L_0 \frac{d}{dt}\left(\bar{i}_S e^{-j\varepsilon}\right) = 0 \qquad (2)$$

Rotor circuit in rotor coordinates

$$J\frac{d\omega}{dt} = m_M - m_L = \frac{2}{3} L_0 \Im\left[\bar{i}_S \left(\bar{i}_R e^{j\varepsilon}\right)^{*}\right] - m_L \qquad (3)$$

Torque equation in which:

$L_0$ = mutual inductance
$L_S = (1 + \sigma_S)L_0$ = stator inductance
$L_R = (1 + \sigma_R)L_0$ = rotor inductance
$\sigma_S$ = stator leakage factor
$\sigma_R$ = rotor leakage factor

$$\sigma = 1 - \frac{1}{\left(1+\sigma_S\right)\left(1+\sigma_R\right)} = \text{leakage factor}$$

$\varepsilon$ = rotor angle (mechanical angle)
$\dot{\varepsilon} = \omega$ = rotor frequency (mechanical speed)
$\rho$ = rotor flux angle
$\dot{\rho} = \omega_{mR}$ = rotor flux frequency

$$T_R = \frac{L_R}{R_R} = \text{rotor time constant}$$

s = Laplace operator

$\Im$ = symbol for "imaginary component"
* = symbol for "complex conjugate value"
$R_S$ = stator resistance
$R_R$ = rotor resistance
$L_S$ = main inductance
$\omega_{mR}$ = electrical frequency
$\omega$ = rotor frequency
$\rho$ = vector rotation angle
$\Delta = \rho_1 - \rho_2$ = vector rotation error
$i_{mR}$ = reference value for magnetizing current
$i_{Sd}$ = measured value of magnetizing current

$i_{Sq}$ = torque producing current
$u_{Sd}$ = control voltage in d-channel
$u_{Sq}$ = control voltage in q-channel

## Patentansprüche

1. Steuerungssystem für einen Wechselstrominduktionsmotor für eine sensorlose feldorientierte Steuerung, mit einem Stator, einem Rotor, mindestens zwei Statorwicklungen und mindestens zwei Rotorwicklungen, wobei das Steuerungssystem erste ($u_{Sq}$) und zweite ($u_{Sd}$) Steuersignale aufweist, aus denen Ausgangsspannungen ($u_{SR}$, $u_{SS}$, $u_{ST}$) berechnet und in den Motor für den Betrieb und die Steuerung des Motors eingespeist werden, wobei das erste Steuersignal ($u_{Sq}$) das Drehmoment des Motors und das zweite Steuersignal ($u_{Sd}$) den Magnetisierungsstrom oder -fluss des Motors im Wesentlichen steuert, und zwar für eine Steuerung in vier Quadranten, wobei in einem Bereich dicht an der elektrischen Frequenz 0, wo das System eine Instabilität besitzt, das Steuerungssystem einen Kompensationswert zu einer elektrischen Steuerfrequenz ($\omega_{mR}$), durch das Steuerungssystem berechnet, hinzuaddiert, **dadurch gekennzeichnet, dass** das Steuerungssystem außerdem ein Motormodell und ein Steuerungsmodell aufweist und der Kompensationswert

   - $(i_{mR1} - i_{Sd1})$ * $(2 * i_{Sq2} * R_{S1})$ / $(i_{mR1} * i_{mR1} * L_{S1})$ ist, wobei

   $i_{mR}$ = Differenzwert für Magnetisierungsstrom,
   $I_{Sd}$ = gemessener Wert des Magnetisierungsstroms,
   $I_{Sq}$ = Drehmoment erzeugender Strom,
   $R_S$ = Statorwiderstand,
   $L_S$ = Hauptinduktivität
   ist und sich Index "1" auf ein Steuerungsmodell und Index "2" auf ein Motormodell des Steuerungssystems bezieht.

2. System nach Anspruch 1, **dadurch gekennzeichnet, dass** der Kompensationswert in einem Instabilitätsbereich hinzuaddiert ist, in welchem eine interne Rückkopplung eines Fehlerwinkels ($\Delta$) nicht negativ ist.

3. System nach Anspruch 2, **dadurch gekennzeichnet, dass** der Instabilitätsbereich im Intervall des ersten Steuersignals $u_{Sq1}$ von 0 bis $i_{Sq2}R_{S1}$ liegt, wo $i_{Sq2}$ ein gemessener Rotorstrom und $R_{S1}$ ein Statorwiderstand ist.

4. System nach einem der Ansprüche 2 bis 3, **dadurch gekennzeichnet, dass** der Kompensationswert mit einer Funktion multipliziert ist, die ihn auf 0 außerhalb des Instabilitätsbereiches sinken lässt.

5. Verfahren zur Steuerung eines Wechselstrominduktionsmotors (M) zur feldorientierten Steuerung, welcher einen Stator, einen Rotor, mindestens zwei Statorwicklungen und mindestens zwei Rotorwicklungen aufweist, wobei das Steuerungssystem erste ($u_{Sq}$) und ($u_{Sd}$) Steuersignale aufweist, aus denen Ausgangsspannungen ($u_{SR}$, $u_{SS}$, $u_{ST}$) berechnet und in den Motor für den Betrieb und die Steuerung des Motors eingespeist werden, wobei das erste Steuersignal ($u_{Sq}$) das Drehmoment des Motors und das zweite Steuersignal ($u_{Sd}$) den Magnetisierungsstrom oder -fluss des Motors im Wesentlichen steuert, und zwar für eine Steuerung in vier Quadranten, wobei in einem Bereich dicht an der elektrischen Frequenz 0, wo das System eine Instabilität besitzt, das Steuerungssystem einen Kompensationswert zu einer elektrischen Steuerfrequenz ($\omega_{mR}$), durch das Steuerungssystem berechnet, hinzuaddiert, **dadurch gekennzeichnet, dass** das Steuerungssystem außerdem ein Motormodell und ein Steuerungsmodell aufweist und der Kompensationswert

   - $(i_{mR1} - i_{Sd1})$ * $(2 * i_{Sq2} * R_{S1})$ / $(i_{mR1} * i_{mR1} * L_{S1})$ ist, wobei

   $i_{mR}$ = Differenzwert für Magnetisierungsstrom,
   $I_{Sd}$ = gemessener Wert des Magnetisierungsstroms,
   $I_{Sq}$ = Drehmoment erzeugender Strom,
   $R_S$ = Statorwiderstand,
   $L_S$ = Hauptinduktivität
   ist und sich Index "1" auf ein Steuerungsmodell und Index "2" auf ein Motormodell des Steuerungssystems bezieht.

6. Verfahren nach Anspruch 5, **gekennzeichnet durch** eine Addition des Kompensationswertes nur in einem Instabilitätsbereich, in welchem eine interne Rückkopplung eines Fehlerwinkels ($\Delta$) nicht negativ ist.

7. Verfahren nach 6, **dadurch gekennzeichnet, dass** der Instabilitätsbereich im Intervall des ersten Steuersignals $u_{Sq1}$ von 0 bis $i_{Sq2}R_{S1}$ liegt, wo $i_{Sq2}$ ein gemessener Rotorstrom und $R_{S1}$ ein Statorwiderstand ist.

8. Verfahren nach einem der Ansprüche 5 bis 7, **dadurch gekennzeichnet, dass** der Kompensationswert mit einer Funktion multipliziert wird, die ihn auf 0 außerhalb des Instabilitätsbereiches sinken lässt.

9. Verfahren nach einem der Ansprüche 5 bis 8, **dadurch gekennzeichnet, dass** das Motorsteuerungssystem auf folgenden Gleichungen basiert:

$$R_S \bar{i}_S + L_S \frac{d\bar{i}_S}{dt} + L_0 \frac{d}{dt}\left(\bar{i}_R e^{j\varepsilon}\right) = \bar{u}_S \qquad (1)$$

Statorkreis in Statorkoordinaten

$$R_R \bar{i}_R + L_R \frac{d\bar{i}_R}{dt} + L_0 \frac{d}{dt}\left(\bar{i}_S e^{-j\varepsilon}\right) = 0 \qquad (2)$$

Rotorkreis in Rotorkoordinaten

$$J\frac{d\omega}{dt} = m_M - m_L = \frac{2}{3} L_0 \Im\left[\bar{i}_S \left(\bar{i}_R e^{j\varepsilon}\right)^*\right] - m_L \qquad (3)$$

Drehmomentgleichung
wobei
$L_0$ = Gegeninduktivität
$L_S = (1 + \sigma_S)L_0$ = Statorinduktivität
$L_R = (1 + \sigma_R)L_0$ = Rotorinduktivität
$\sigma_S$ = Statorstreufaktor
$\sigma_R$ = Rotorstreufaktor

$$\sigma = 1 - \frac{1}{(1+\sigma_S)(1+\sigma_R)} = \text{Streufaktor}$$

$\varepsilon$ = Rotorwinkel (mechanischer Winkel)
$\dot{\varepsilon} = \omega$ = Rotorfrequenz (mechanische Geschwindigkeit)
$\rho$ = Rotorflusswinkel
$\dot{\rho} = \omega_{mR}$ = Rotorflussfrequenz

$$T_R = \frac{L_R}{R_R} = \text{Rotorzeitkonstante}$$

$s$ = Laplace-Operator

$\Im$ = Symbol für "imaginäre Komponente"
$*$ = Symbol für "komplex-konjugierten Wert"
$R_S$ = Statorwiderstand
$R_R$ = Rotorwiderstand

$L_S$ = Hauptinduktivität

$\omega_{mR}$ = elektrische Frequenz

$\omega$ = Rotorfrequenz

$\rho$ = Vektordrehwinkel

$\Delta = \rho_1 - \rho_2$ = Vektordrehfehler

$i_{mR}$ = Referenzwert für Magnetisierungsstrom

$i_{Sd}$ = gemessener Wert des Magnetisierungsstroms $i_{Sq}$ = Drehmoment erzeugender Strom

$u_{Sd}$ = Steuerspannung im d-Kanal

$u_{Sq}$ = Steuerspannung q-Kanal

ist.

**Revendications**

1. Dispositif de commande d'un moteur à induction à courant alternatif afin d'assurer la commande orientée de champ sans capteur, comprenant un stator, un rotor, au moins deux enroulements de stator et au moins deux enroulements de rotor, ledit dispositif de commande comprenant des premier ($u_{Sq}$) et second ($u_{Sd}$) signaux de commande, à partir desquels des tensions de sortie ($u_{SR}$, $u_{SS}$, $u_{ST}$) sont calculées et délivrées au moteur afin d'assurer le fonctionnement et la commande du moteur, dans lequel ledit premier signal de commande ($u_{Sq}$) commande principalement le couple du moteur et ledit second signal de commande ($u_{Sd}$), commande principalement le courant ou flux de magnétisation du moteur, afin d'assurer une commande dans quatre quadrants,
dans lequel, dans une zone proche de la fréquence électrique zéro, dans laquelle le dispositif présente une instabilité, le dispositif de commande ajoute une valeur de compensation à une fréquence de commande électrique ($\omega_{mR}$) calculée par le dispositif de commande,
**caractérisé en ce que** ledit dispositif de commande comprend, en outre, un modèle de moteur et un modèle de commande, et ladite valeur de compensation est donnée par la formule :

$$- (i_{mR1} - i_{Sd1}) * (2 * i_{Sq2} * R_{S1}) / (i_{mR1} * i_{mR1} * L_{S1}), \text{ dans laquelle :}$$

$i_{mR}$ = valeur de référence pour le courant de magnétisation,
$i_{Sd}$ = valeur mesurée du courant de magnétisation
$i_{Sq}$ = courant de production de couple
$R_S$ = résistance de stator
$L_S$ = inductance principale
et l'indice "1" se réfère à un modèle de commande et l'indice "2" se réfère à un modèle de moteur du dispositif de commande.

2. Dispositif selon la revendication 1, **caractérisé en ce que** ladite valeur de compensation est ajoutée dans une zone d'instabilité dans laquelle une valeur de retour interne d'un angle d'erreur ($\Delta$) n'est pas négative.

3. Dispositif selon la revendication 2, **caractérisé en ce que** ladite zone d'instabilité est dans l'intervalle du premier signal de commande $u_{Sq1}$ à partir de zéro jusqu'à $i_{Sq2}*R_{S1}$ où $i_{Sq2}$ est un courant de rotor mesuré et $R_{S1}$ est la résistance de stator.

4. Dispositif selon l'une quelconque des revendications 2 à 3, **caractérisé en ce que** la valeur de compensation est multipliée par une fonction qui la fait décroître vers zéro à l'extérieur de la zone d'instabilité.

5. Procédé de commande d'un moteur à induction à courant alternatif (M) afin d'assurer la commande orientée de champ, comprenant un stator, un rotor, au moins deux enroulements de stator et au moins deux enroulements de rotor, ledit dispositif de commande comprenant des premier ($u_{Sq}$) et second ($u_{Sd}$) signaux de commande, à partir desquels des tensions de sortie ($u_{SR}$, $u_{SS}$, $u_{ST}$) sont calculées et délivrées au moteur afin d'assurer le fonctionnement et la commande du moteur, dans lequel ledit premier signal de commande ($u_{Sq}$) commande principalement le couple du moteur et ledit second signal de commande ($u_{Sd}$) commande principalement le courant ou flux de magnétisation du moteur, afin d'assurer une commande dans quatre quadrants,
dans lequel dans une zone proche de la fréquence électrique zéro, dans laquelle le dispositif présente une instabilité, le dispositif de commande ajoute une valeur de compensation à une fréquence de commande électrique ($\omega_{mR}$)

calculée par le dispositif de commande,
**caractérisé en ce que** ledit dispositif de commande comprend, en outre, un modèle de moteur et un modèle de commande, et ladite valeur de compensation est donnée par la formule :

$- (i_{mR1} - i_{Sd1}) * (2 * i_{Sq2} * R_{S1}) / (i_{mR1} * i_{mR1} * L_{S1})$, dans laquelle :

$i_{mR}$ = valeur de référence pour le courant de magnétisation,
$i_{Sd}$ = valeur mesurée du courant de magnétisation
$i_{Sq}$ = courant de production de couple
$R_S$ = résistance de stator
$L_S$ = inductance principale
et l'indice "1" se réfère à un modèle de commande et l'indice "2" se réfère à un modèle de moteur du dispositif de commande.

6. Procédé selon la revendication 5, **caractérisé par** l'ajout de ladite valeur de compensation uniquement dans une zone d'instabilité dans laquelle une valeur de retour interne d'un angle d'erreur ($\Delta$) n'est pas négative.

7. Procédé selon la revendication 6, **caractérisé en ce que** ladite zone d'instabilité est dans l'intervalle du premier de signal de commande $u_{Sq1}$ à partir de zéro jusqu'à $i_{Sq2} R_{S1}$ où $i_{Sq2}$ est un courant de rotor mesuré et $R_{S1}$ est la résistance de stator.

8. Procédé selon l'une quelconque des revendications 5 à 7, **caractérisé en ce que** la valeur de compensation est multipliée par une fonction qui la fait décroître vers zéro à l'extérieur de la zone d'instabilité.

9. Procédé selon l'une quelconque des revendications 5 à 8, **caractérisé en ce que** le dispositif de commande de moteur est basé sur les équations suivantes :

$$R_S \bar{i}_S + L_s \frac{d\bar{i}_S}{dt} + L_0 \frac{d}{dt}\left(\bar{i}_R e^{j\varepsilon}\right) = \bar{u}_S \qquad (1)$$

Circuit de stator en coordonnées de stator

$$R_R \bar{i}_R + L_R \frac{d\bar{i}_R}{dt} + L_0 \frac{d}{dt}\left(\bar{i}_S e^{-j\varepsilon}\right) = 0 \qquad (2)$$

Circuit de rotor en coordonnées de rotor

$$J \frac{d\omega}{dt} = m_M - m_L = \frac{2}{3} L_0 \frac{d\omega}{dt} \Im\left[\bar{i}_S\left(\bar{i}_R e^{j\varepsilon}\right)^*\right] - m_L \quad (3)$$

équation de couple dans lesquelles:

$L_0$ = inductance mutuelle
$L_S = (1 + \sigma_S) L_0$ = inductance de stator
$L_R = (1 + \sigma_R) L_0$ = inductance de rotor
$\sigma_S$ = facteur de fuite de stator
$\sigma_R$ = facteur de fuite de rotor

$$\sigma = 1 - \frac{1}{(1 + \sigma_S)(1 + \sigma_R)} = \text{facteur de fuite}$$

$\varepsilon$ = angle de rotor (angle mécanique)

$\dot{\varepsilon}$ = $\omega$ = fréquence de rotor (vitesse mécanique)

$\rho$ = angle de flux de rotor

$\dot{\rho}$ = $\omega_{mR}$ = fréquence de flux de rotor

$$T_R = \frac{L_R}{R_R} = \text{constante de temps de rotor}$$

s = opérateur de Laplace

$\Im$ = symbole pour "composante imaginaire"

\* = symbole pour "valeur conjuguée complexe"

$R_S$ = résistance de stator

$R_R$ = résistance de rotor

$L_S$ = inductance principale

$\omega_{mR}$ = fréquence électrique

$\omega$ = fréquence de rotor

$\rho$ = angle de rotation de vecteur

$\Delta$ = $\rho 1 - \rho_2$ = erreur de rotation de vecteur

$i_{mR}$ = valeur de référence pour le courant de magnétisation

$i_{Sd}$ = valeur mesurée du courant de magnétisation

$i_{Sq}$ = courant de production de couple

$u_{Sd}$ = tension de commande sur canal d

$u_{Sq}$ = tension de commande sur canal q

$\omega_{\text{Re}f}$

Speed − Controller   $i_q$ − Controller   Vector Rotator   2 − phase/ 3 − phase

$i_{q\,\text{Re}f}$

$u_{Sq}$   $u_{Sa}$   $u_{SR}$

$e^{j\rho}$   2   $u_{SS}$

$i_{d\,\text{Re}f}$   $u_{Sd}$   $u_{Sb}$   3   $u_{ST}$

Flux − Controller   $i_d$ − Controller

$i_{Sq}$   $i_{Sa}$   $i_{SR}$

2

$e^{-j\rho}$   $i_{SS}$

$i_{Sd}$   $i_{Sb}$   3   $i_{ST}$

Motor − Model   Vector Rotator   2 − phase/ 3 − phase

Field Coordinates   Stator Coordinates

$u_{SR}$

Stator

Rotor

$u_{SS}$

$u_{ST}$

$i_{SR}$

$i_{SS}$   Figure 1

$i_{ST}$

23

**Figure 2**

**Figure 3**

**Figure 4**

EP 1 723 716 B1

Figure 5

**Figure 6**

EP 1 723 716 B1

Figure 7

28

Figure 8

**Figure 9**

Legend: ——— Original    — — New

F(Uq) vs. Control Voltage Uq

EP 1 723 716 B1

Figure 10

Figure 11

Figure 12

$$u_{Sq1} - i_{Sq2}R_{S1} = proportional\, to\, electrical\, frequency$$

$$u_{Sq1} - i_{Sq2}\left(R_{S1} + R_{R1}\right) = proportional\, to\, rotor\, frequency$$

$$i_{Sq2} \geq 0$$

Figure 13

Figure 14

**Figure 15**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0515469 B

**Non-patent literature cited in the description**

- **Kubota H. et al.** Stable operation of adaptive observer based sensorless induction motor drives in regenerating mode at low speeds. *Conference Record of the 2001 IEEE Industry Application Conference,* 2001, vol. 1, 469-474

- **W. Leonhard.** Control of Electrical Drives. Springer Verlag, 2001